# FASCICULE DE BREVET EUROPEEN

(11) **EP 2 282 432 B1**
(45) Date de publication et mention de la délivrance du brevet: **23.10.2013**
(21) Numéro de dépôt: 10171138.0
(22) Date de dépôt: 28.07.2010
(51) Int. Cl.: H04L 1/00

(54) **Procédé de transmission de données multimedia dans des réseaux de communication ad hoc**
Verfahren zur Übertragung von Multimedia-Daten in ad-hoc Netzwerken
Method for transmitting multimedia data in ad hoc communication networks

(30) Priorité: 31.07.2009 FR 0903789
(43) Date de publication de la demande: 09.02.2011
(73) Titulaire: Thales, 92200 Neuilly Sur Seine (FR)
(72) Inventeur: Lamy-Bergot, Catherine, 92700, Colombes (FR); Fracchia, Roberta, 92700, Colombes (FR)
(74) Mandataire: Dudouit, Isabelle

(56) Documents cités:
- WO-A2-2006/122225
- CHAKERES I ET AL: "Allowing bit errors in speech over wireless LANs" COMPUTER COMMUNICATIONS, ELSEVIER SCIENCE PUBLISHERS BV, AMSTERDAM, NL LNKD- DOI:10.1016/J.COMCOM.2005.02.009, vol. 28, no. 14, 1 septembre 2005 (2005-09-01), pages 1643-1657, XP025273292 ISSN: 0140-3664 [extrait le 2005-09-01]
- PATRICK PAK-KIT LAM ET AL: "UDP-liter: an improved UDP protocol for real-time multimedia applications over wireless links" WIRELESS COMMUNICATION SYSTEMS, 2004, 1ST INTERNATIONAL SYMPOSIUM ON MAURITIUS 20-22 SEPT. 2004, PISCATAWAY, NJ, USA,IEEE LNKD- DOI:10.1109/ISWCS.2004.1407260, 20 septembre 2004 (2004-09-20), pages 314-318, XP010780688 ISBN: 978-0-7803-8472-9

## Description

L'objet de la présente invention concerne un procédé de transmission de données dans un réseau de communication qui utilise des « proxy » intelligents dans chaque point d'un réseau pair. Par le mot « proxy » on désigne le relayage des requêtes entre un poste client et un serveur ou une source et par l'expression « réseau pair à pair », un réseau dans lequel il y a partage des fichiers en pair à pair, expression plus connue sous l'acronyme anglo-saxon « Peer-to-Peer ».

Le procédé selon l'invention concerne les diffusions de flux multimédia dans un contexte de réseau de communication ad hoc d'une source vers de multiples clients. Pour des raisons de simplification dans la suite de la description, le mot « proxylite » sera utilisé pour désigner de manière générique le procédé selon l'invention, quelque soit le mode de réalisation envisagé.

Dans le domaine des communications sans fils, différents protocoles ont été introduits ces dernières années afin de permettre la propagation dans les couches OSI (acronyme de « Interconnexion de systèmes ouverts ») de paquets dont le contenu n'est pas parfait. Wimax acronyme pour *Worldwide Interoperability for Microwave Access* est le cas le plus notable pour les couches radio, où une somme de contrôle réduite à l'en-tête liaison a été introduite, et permet de remonter à la couche réseau un paquet non parfait. Similairement sont apparus des protocoles de transport comme UDP-Lite qui est très similaire au protocole UDP. Le protocole UDP Lite autorise des contrôles partiels qui couvrent une partie seulement des données et peut délivrer des paquets partiellement corrompus. Il est particulièrement utile pour des transmissions multimédias, telles que la diffusion de flux vidéo ou la voix sur IP, dans lequel il est préférable de recevoir un paquet avec une charge utile partiellement endommagée que de ne pas recevoir de paquets du tout. Le protocole DCCP acronyme de "Datagram Congestion Control Protocol » est un protocole de communication de couche de transport orienté message. Ces deux derniers protocoles, UDP-Lite et DCCP de transport ont introduit des sommes de contrôle partielles permettant de vérifier les en-têtes des paquets tout en laissant passer des paquets dont la charge utile ou données utiles est erronée.

L'art antérieur connu du Demandeur présente notamment comme inconvénient de travailler exclusivement avec des solutions de retransmission en mode point à point ou avec des solutions de multicast, émission de diffusion de l'information d'un émetteur vers un groupe (éventuellement avec retransmissions) pour des diffusions multipoints synchronisés dans le temps.

Dans les techniques de l'art antérieur, on ne tire donc pas parti de la capacité qu'ont les flux multimédias à autoriser des décodages même sur des flux partiellement corrompus. Les techniques connues de l'art antérieur ne s'adaptent donc pas aux limitations des réseaux ad hoc, par exemple, en sachant tirer efficacement parti des capacités particulières des flux multimédias.

Le document de Chakeres et al ; « allowing bit errors in speech over wireless LANs », Computer Communications, Elsevier Science Publishers BV, Amsterdam, NL, LNKD-DOI ; 10.1016/J.COMCOM.2005.02.2009, vol.28" n°14, 1.9.2005, pages 1643-1657, XP025273292ISSN :0140-3664 concerne la transmission voix su IP dans un réseau de communication LAN sans fil. L'auteur cherche à réduire le nombre de retransmissions en permettant des erreurs dans les données utiles. Dans ce but, le CRC de la couche MAC protège seulement les entêtes sensitives tandis que la charge de données erronée est remontée à la couche applicative afin d'y être corrigée par le décodeur de voix.

Le document de Patrick Pat-Kit, « UDP-liter : an improved UDP protocol for real time multimedia applications over wireless links », Wireless Communication systems, 2004, 1 ST International symposium on Mauritius 20-22 SEPT.2004, PISCATAWAY, NJ, IEEE LNKD-DOI: 10.1109/ISWCSS.2004.14070260, 20 septembre 2004, pages 314-318, XP010780688 divulgue une approche similaire. Le CRC a lieu dans la couche transport. Toutes les erreurs dans les données utiles sont ignorées et les trames associées sont remontées à l'application pourvues d'un indicateur du fait que la charge des données est corrompue. Par conséquent, le décodeur audio/vidéo peut dissimuler de telles erreurs sans nécessiter la retransmission des trames.

Le document WO 2006/122225 propose de faire suivre les trames erronées à la couche applicative en indiquant leur corruption pour autoriser le décodage même sur des données partiellement corropues.

L'objet de la présente demande de brevet est relatif à un procédé de diffusion plus efficace que les procédés connus de l'art antérieur pour des flux multimédia dans un contexte de communication ad hoc d'une source vers de multiples clients. L'intérêt de considérer en particulier les transmissions multimédia s'explique par le fait que les décodeurs son, image ou vidéo sont capables d'absorber un taux d'erreur résiduel. En effet, ces décodeurs mettent en général en place des techniques de masquage jouant sur les capacités humaines de l'oeil et de l'oreille à accepter ou compenser des défauts résiduels.

L'objet de l'invention concerne un procédé de transmission de données multimédia dans un réseau de communication ad hoc comprenant au moins une source S et plusieurs nuds Ni communiquant entre eux au moyen de liens Li, ledit procédé comprenant au moins les étapes suivantes mises en oeuvre dans un nombre Np desdits noeuds.

Recevoir au moins un paquet de données multimédia,

Effectuer un calcul du CRC radio complet dudit paquet reçu,
a) dans le cas où la valeur du CRC en-tête comporte une erreur, alors le paquet est éliminé,
b) dans le cas où la valeur du CRC en-tête est sans erreur, alors l'étape suivante consiste à regarder si le noeud en cours Ni est le noeud destinataire
c) Si le noeud courant est le noeud destinataire, alors le procédé va remonter la valeur du CRC radio complet, tester si la valeur du CRC transport est erronée, éliminer le paquet si cette valeur est erronée, sinon, remonter le paquet vers l'application pour décodage,
d) Si le noeud courant n'est pas le noeud destinataire, alors, le procédé stocke le paquet dans une pile temporaire Q et initialise un timer T (pkltd) correspondant à une durée maximale de traitement des données du paquet,
   le procédé vérifie ensuite la valeur du CRC radio complet du paquet,
   si cette dernière est correcte alors le procédé va modifier la pile Q et remettre à zéro le timer T(pkltd) pour envoi du paquet, puis le procédé passe au traitement d'un autre paquet de données multimédia,
   si la valeur du CRC des données est erronée, alors le procédé lance le déclenchement du timer CKS_VER(Pkld), pour une vérification au niveau de l'intégrité de la charge des données,
   en parallèle, le procédé effectue la remontée du paquet des données multimédia vers les couches hautes du réseau radio, en éliminant les paquets dont la valeur du CRC transport est erronée et en faisant remonter les en-têtes correctes pour le paquet Pkld pour les paquets dont la valeur du CRC est correcte,
   si le timer CKS_VER(Pkld) qui correspond à la vérification de l'intégrité du paquet, est expiré, dans tous les cas, le procédé modifie la pile Q en éliminant le paquet,
e) à l'expiration du timer T(Pkld) le procédé va extraire le paquet de la pile Q pour le transmettre sur un nouveau bond, ou vers un autre noeud du réseau, pour cela il va effectuer un re-calcul du CRC radio complet, puis va émettre le paquet sur le lien physique vers le bond suivant en destination d'un noeud du réseau.

Au cours de l'étape d), si le timer CKS_VER(Pkld) n'est pas expiré, alors le procédé peut modifier la pile ou mémoire temporaire Q en positionnant un champ indiquant la corruption du paquet, par exemple par l'indication (CRC_Error_Flag).

Selon une variante de réalisation un paquet de données comprend une étiquette correspondant à une information dans une extension spécifique de l'en-tête RTP du paquet, ladite en-tête RTP spécifique contenant une somme de contrôle supplémentaire permettant la validation de l'en-tête RTP et éventuellement des premiers octets de la charge utile, les paquets étant éliminés lorsque cette valeur est erronée.

Le procédé peut comporter une étape de mémorisation d'informations incluant au moins les étapes suivantes :
lorsque le noeud sur lequel sont reçues les données est destinataire, simultanément le procédé remonte la valeur du CRC radio complet, et fait une copie du paquet dans une pile P pour stockage dans ladite pile P de l'identifiant du paquet, de la charge utile du paquet et de l'état du paquet,
dans le cas où le noeud n'est pas destinataire, alors, lorsque la valeur du CRC radio complet est incorrecte, le procédé remonte, l'information erronée pour stockage, et déclenche le timer CKS_VER(Pkld) de vérification du paquet,
lorsque la valeur du CRC radio complet est correct et la valeur du CRC_Error Flag est correcte, ledit procédé transmet l'information correcte pour stockage, remonte l'information erronée pour stockage et selon les étapes du procédé décrites ci-dessus, le procédé déclenche une demande de vérification de l'intégrité du paquet CKS_VER_REQ, et le lancement de timer CKS_VER(Pkld) pour vérification de l'intégrité du paquet,
lors de l'étape de remontée du paquet vers les couches hautes, le procédé va remonter vers la pile P l'information de stockage pour le paquet Pkld,
dans le cas où la transmission sur le dernier bond a corrompu le paquet, le module de réponse aux demandes de contrôle CKS_VER_REQ est sollicité et va donc, au lancement du timer CKS-VER(Pkld), en parallèle de la remontée, interroger la pile P pour vérifier si cette dernière contient une version intègre du paquet, auquel cas le timer CKS_VER(Pkld) est mis à zéro, et le procédé substitue à la charge utile erronée la charge utile intègre dans le tampon Q,
à l'expiration du timer T(Pkld), le procédé va extraire le paquet pour transmission en ayant au préalable, recalculé le CRC radio,
s'il ne trouve pas de paquet intègre, le procédé attend la remontée de paquet et il propage le paquet lorsque seule la charge utile ou données a été corrompue.

Lors du stockage dans la pile P, le procédé mémorise, par exemple, les données reçues au niveau du noeud ainsi que l'identification de données, information sur sa possible corruption à chaque remontée dans la pile P.

Le procédé peut comporter une étape d'interception des requêtes en voie montante, les requêtes émises d'un client vers la source d'émission, et en ce qu'il comporte au moins les étapes suivantes :
Sur réception d'une nouvelle demande de transmission multimédia, le procédé :
   - calcule la valeur CRC radio complet.
   - teste la valeur du CRC en-tête liaison,
      si cette dernière est erronée, alors le paquet est éliminé
      si la valeur du CRC en-tête est sans erreur: alors
      si le noeud est le destinataire: le paquet est remonté vers l'application
      si le noeud n'est pas le destinataire, alors :
         le paquet est stocké dans la pile temporaire Q avec le timer T(pkltd)
         le paquet est remonté vers l'application,
         à l'expiration du timer le paquet est transmis sur un nouveau bond après re-calcul du CRC complet
Au niveau application:
   - si les données demandées sont stockées dans la pile P, la pile P envoie la réponse nécessaire ou commence directement la transmissions des données demandées, sinon elle envoie un message pour éliminer le paquet de la pile Q.

L'invention concerne aussi un système de transmission de données multimédia dans un réseau ad hoc comprenant au moins une source émettrice de données multimédia et plusieurs noeuds Ni communiquant entre eux grâce à des liens Li, lesdits noeuds comprenant une partie récepteur, permettant de recevoir un paquet de données, une partie émettrice ayant pour fonction de transférer un paquet vers un Ni, caractérisé en ce que Np noeuds sont équipés des éléments supplémentaires suivants : une pile Q correspondant à une mémoire de stockage temporaire, une pile P ou mémoire à long terme, un processeur adapté à exécuter les étapes du procédé selon les caractéristiques décrites précédemment.

D'autres caractéristiques et avantages du dispositif selon l'invention apparaîtront mieux à la lecture de la description qui suit d'un exemple de réalisation donné à titre illustratif et nullement limitatif annexé des figures qui représentent :
- La figure 1, un exemple de réseau ad-hoc et des différentes communications pair à pair mobile,
- La figure 2A, un exemple d'architecture du réseau selon l'invention, la figure 2B, un exemple de structure de paquets de données, la figure 2C, un exemple d'implémentation physique au niveau d'un noeud du réseau,
- Les figures 3A, 3B, une comparaison entre le nombre de bonds réalisés dans le cas des transmissions selon l'art antérieur et dans le cas de transmissions selon l'invention,
- La figure 4, la réduction du nombre de bonds à opérer
- La figure 5A, une première variante de réalisation du procédé selon l'invention et la figure 5B, une variante où un noeud du réseau comprend une pile de stockage permanente,
- Les figures 6, 7, 8 et 9 des résultats prouvant l'amélioration de la transmission par rapport aux techniques de l'art antérieur par la mise en oeuvre du procédé et du système selon l'invention.

Afin de mieux faire comprendre l'objet de la présente invention, la description qui va suivre concerne le cas où deux clients distincts souhaitent obtenir le même contenu d'une même source.

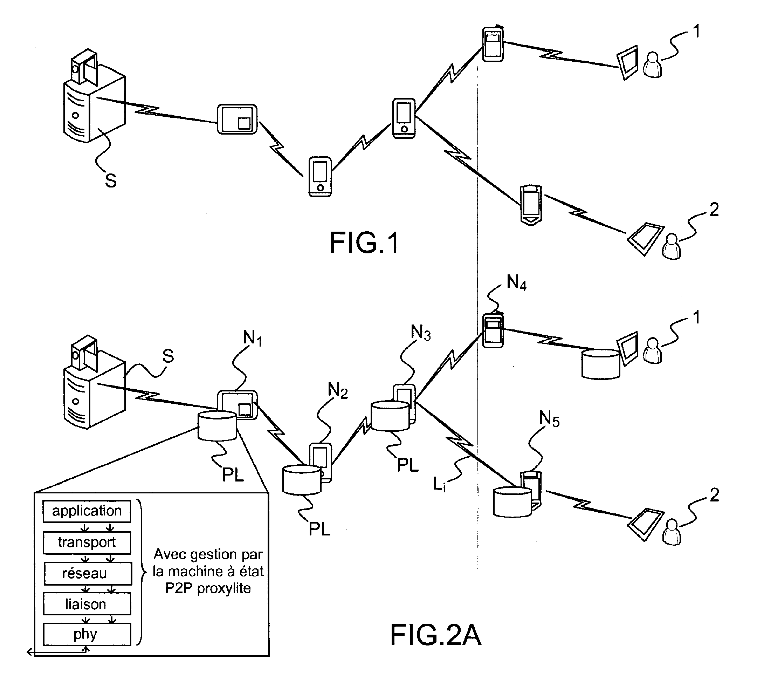

La figure 1 schématise un réseau ad hoc selon l'art antérieur de communication pair à pair mobile depuis une source S de données vidéo avec deux clients 1, 2 identifiés parmi les pairs du réseau ad hoc.
La figure 2A schématise un exemple de mise en oeuvre du procédé et du système selon l'invention comprenant, de la même façon que sur la figure 1, une source S et deux clients 1, 2. Les clients 1, 2 dans cet exemple souhaitent obtenir le même contenu d'une même source. Les demandes étant, en générales asynchrones, elles sont traitées séparément comme des communications unicast (acronyme pour définir une connexion réseau point à point). De plus, même en cas de demandes synchrones, l'établissement de liens multicast sur un réseau ad hoc reste un problème complexe. Sur cette figure sont représentés n noeuds référencés Ni, dont un nombre donné Np est équipé d'une application PL selon l'invention ou logiciel permettant de gérer les transmissions de données multimédia, par exemple, le noeud N₄ sur la figure n'étant pas pourvu d'un équipement selon l'invention. Des liens Li permettent la communication et la transmission des informations ou des données entre eux.

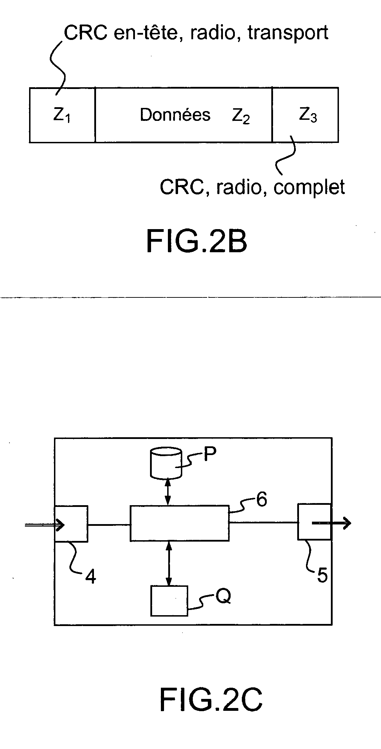

La figure 2B schématise un exemple de structure de paquets de données multimédia au niveau MAC (medium access control), comprenant un ou plusieurs en-têtes, zones Zi, suivis d'une zone Z₂ contenant la charge utile ou données multimédia, et comprenant aussi une ou plusieurs zones Zi pour les différents CRC détaillés dans la suite de la description. Dans les CRC à vérifier, il est possible de mentionner les CRC transport, en-tête, radio qui sont en général disposés avant la zone de données Z₂.
La figure 2C représente un exemple d'architecture de noeud pourvu d'un équipement selon l'invention comprenant une partie récepteur 4 classique, permettant de recevoir un paquet de données et de le transmettre vers un processeur 6 sur lequel est implémenté un procédé selon l'invention, une pile P ou mémoire à long terme et une pile Q correspondant à une mémoire de stockage temporaire, un émetteur 5 ayant pour fonction de retransmettre le paquet vers un autre bon ou autre noeud Ni, un module de requête 70 de réponse aux demandes de contrôle de l'intégrité d'un paquet, ledit module étant par exemple implémenté au niveau du processeur 6 et non représenté sur la figure. Le noeud peut aussi comporter une table de routage non représentée pour des raisons de simplification donnant la destination d'un paquet reçu ou encore un logiciel permettant d'effectuer des requêtes de routage pour connaître le noeud destinataire d'un paquet.

Dans le cas de la transmission de flux multimédia, le découpage en paquets pour la transmission sur un réseau de type IP (abréviation du protocole Internet) fait que chaque paquet IP contient un fragment de l'information du flux multimédia. En réception, la concaténation des fragments de données permettra d'obtenir un flux égal ou proche (si des pertes ou des erreurs sont apparues) du flux original.

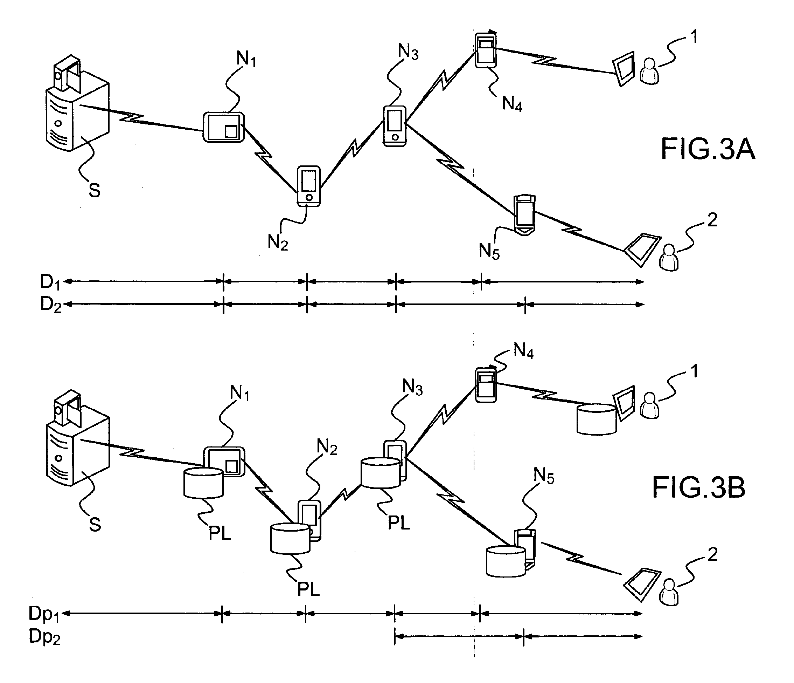

Dans le cas classique, selon les procédés connus de l'art antérieur, chaque client recevra ses données directement de la source S, ce qui est représenté sur la figure 3A par le « diagramme » des bonds effectués à partir de la source jusqu'au client 1 ou jusqu'au client 2.

En revanche, dans le cas où une fonction de proxy intelligente selon l'invention est introduite au moins au niveau de certains des noeuds Ni d'un réseau de type ad hoc, la deuxième demande, celle du client 2, par exemple, n'aura pas nécessairement à remonter jusqu'à la source S mais pourra être servie grâce à la mémorisation des données exécutée, suite à la première communication. Cette différence est illustrée sur la figure 3B par les diagrammes de bonds Dp1 et Dp2, où l'on voit que les bonds pour le client 2 partent du troisième noeud N₃, et passent par le noeud N₆.

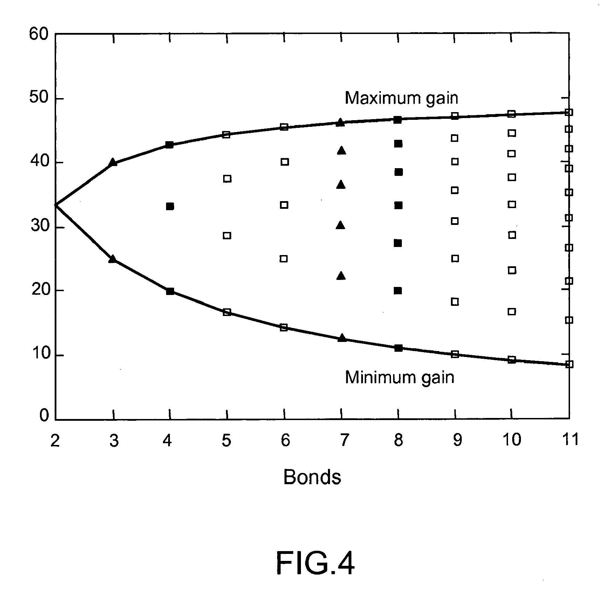

La figure 4 représente le résultat théorique du gain en nombre de messages à envoyer pour deux clients selon leur distance respective et leur distance à la source S. Ce nombre de mesure est proportionnel au nombre de bonds éliminés.

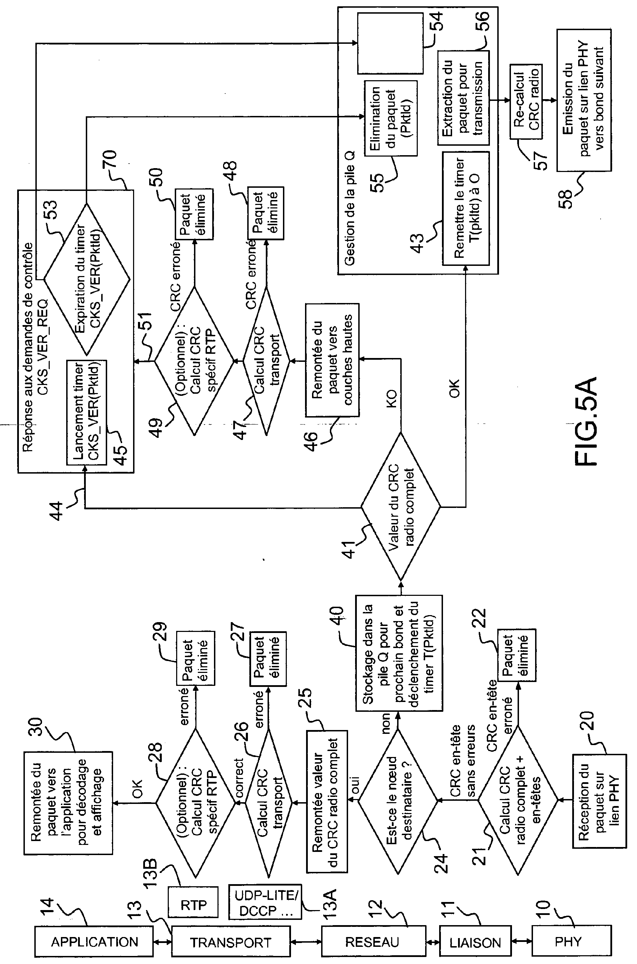

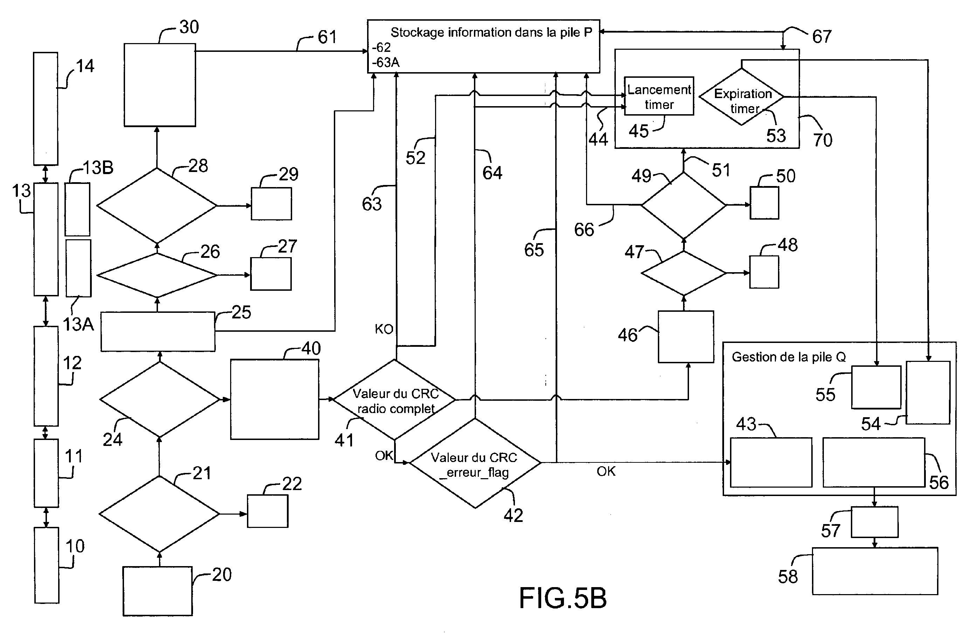

De manière plus détaillée, le procédé mis en oeuvre par l'invention est détaillé à la figure 5A et à la figure 5B selon deux variantes de mise en oeuvre. Sur ces figures 5A, 5B, on a représenté, pour mémoire, la couche physique 10, la couche liaison 11, la couche réseau 12 sur laquelle se trouve la couche transport 13 pouvant être composée d'une couche protocolaire de type UDP-Lite et de la couche RTP, puis de la couche application 14. Cet exemple correspond à une structure donnée à titre illustratif et nullement limitatif pour décrire le procédé mis en oeuvre par l'invention.

La description va s'appuyer sur ces deux figures 5A et 5B, pour décrire deux variantes de mise en oeuvre du procédé selon l'invention. La première mise en oeuvre concerne plus particulièrement le traitement des paquets reçus par un noeud non destinataire, la deuxième variante ajoute au noeud une pile P ou mémoire de stockage.

Une des fonctions du procédé « proxylite » selon l'invention implémenté sur différents noeuds du réseau est, notamment, de remplacer la fonction de simple relais réalisée par le noeud dans le réseau ad hoc en exécutant des opérations en voie descendante, c'est-à-dire, sur les paquets transmis depuis la source S vers un client 1, 2.

Le détail des traitements opérés par le procédé « proxylite » selon l'invention est résumé comme suit, et comme illustré par la description aux figures 5A, 5B de deux variantes de réalisation, de la machine à état traitant du stockage des données en réception et retransmission vers le bond suivant en (opérations en voie « descendante »).

La première variante de mise en oeuvre comprend, par exemple, les étapes suivantes, les numéros permettant de retrouver l'étape sur la figure 5:
20 - la réception d'un paquet de données
21 - le processeur 6 effectue un calcul de la somme de contrôle (notée classiquement CRC) radio complet, c'est-à-dire portant sur la totalité des données, y compris les différents en-têtes ; On notera que dans le cadre du procédé selon l'invention, différentes sommes de contrôles pourront être effectuées sur le paquet total, soit certaines en-têtes : en-tête niveau couche liaison, en-tête du protocole de transport, et optionnellement une somme de contrôle spécifique pouvant être introduite sur l'en-tête RTP (Real-time Transfer Protocol)
22 - dans le cas où la valeur du CRC en-tête liaison comporte une erreur, alors le paquet est éliminé,
24 - dans le cas où la valeur du CRC en-tête liaison est sans erreur, alors l'étape suivante consiste à regarder si le noeud en cours Ni est le noeud destinataire. Ceci se fait, par exemple en vérifiant un identifiant contenu dans le paquet de données transmis.
   Si le noeud courant est le noeud destinataire, alors le procédé va remonter la valeur du CRC radio complet 25, le processeur va tester, 26, si la valeur du CRC transport est erronée, dans le cas où cette valeur est erronée, 27, le paquet est éliminé, dans le cas contraire, le processeur peut également tester si la valeur du CRC spécifique pour RTP est erroné, dans le cas où un CRC spécifique RTP a été ajouté si elle est erronée, 29, le paquet est éliminé, sinon, le paquet est remonté vers l'application 30 pour décodage et affichage ; l'ajout du CRC RTP est une étape optionnelle au procédé ;
   Si le noeud courant n'est pas le noeud destinataire, alors, 40, le procédé va stocker le paquet dans la pile temporaire Q et initialiser un timer T(pkltd) correspondant à une durée maximale de traitement des données du paquet,
      le procédé vérifie ensuite la valeur du CRC radio complet du paquet, 41, (vérification du CRC de l'intégrité des données et de l'en-tête), si cette dernière est correcte alors le procédé va modifier la pile en mettant à zéro le timer T (pkltd) 43, pour envoi immédiat du paquet (56, 57, 58) après avoir recalculé le CRC radio, le paquet est émis par la couche physique vers le bord suivant, puis le procédé passe au traitement d'un autre paquet de données multimédia,
      si la valeur du CRC est des données est erronée, alors 44, il lance le déclenchement du timer CKS_VER(Pkld), 45, vérification au niveau de l'intégrité de la charge des données, et en parallèle, le processeur exécute la remontée 46 du paquet vers les couches hautes, puis calcule 47 le CRC transport, si la valeur du CRC transport est erronée, 48, alors le procédé élimine le paquet, si la valeur du CRC transport est exacte, alors le procédé peut aussi tester la valeur du CRC spécifique RTP, 49, dans le cas où ce dernier existe, par exemple, si cette valeur est erronée, alors le paquet est éliminé 50, si cette valeur est exacte, alors le procédé va remonter 51 les en-têtes correctes pour le paquet Pkld,
      si le timer VER(Pkld) qui correspond à la vérification de l'intégrité du paquet, est expiré, dans tous les cas, le procédé modifie la pile Q en éliminant 55 le paquet Pkld,
      si le timer VER(Pkld) n'est pas expiré, alors le procédé peut de manière optionnelle modifier la pile ou mémoire temporaire Q en positionnant dans le paquet un champ d'information spécifique (dit CRC error flag du paquet Pkld) indiquant qu'il n'est pas parfait 54,
      à l'expiration du timer T(Pkld), 56, le procédé va extraire le paquet de la pile Q pour le transmettre vers l'émetteur du noeud pour transmission sur un nouveau bond, ou vers un autre noeud du réseau, pour cela il va effectuer un re-calcul du CRC radio complet 57, puis va émettre le paquet sur le lien physique 58 vers le bond suivant en destination d'un noeud du réseau.

Selon une deuxième variante de mise en oeuvre, on considère qu'un noeud peut être équipé d'une pile P ou mémoire à long terme qui va servir à stocker des informations sur des paquets ayant transité par ce noeud, que le noeud soit destinataire ou simplement un noeud de transit capable de conserver les données pour une utilisation une requête future après éventuels recalculs de CRC.

Dans ce cas, le procédé détaillé à la figure 5B possède en plus des étapes décrites en relation avec la figure 5A les étapes supplémentaires décrites ci-après, les références semblables sur les figures 5A et 5B correspondent à des états ou étapes du procédé identiques.

Lorsque le noeud est destinataire, lorsque le procédé remonte la valeur du CRC radio complet (étape 25), il va en plus, 61, faire une copie du paquet dans la pile P pour stockage et 62, stocker dans la pile P l'identifiant du paquet, la charge utile ou les données du paquet et l'état du paquet (intégrité du paquet, erreurs contenues dans les données ou la charge utile), par exemple le champ CRC error flag.

Dans le cas où le noeud n'est pas destinataire, alors, lorsque la valeur du CRC radio complet est incorrect, le procédé remonte 63, l'information erronée 63A, pour stockage, et déclenche 52 le timer CKS_VER(Pkld) de vérification du paquet,
étape 63 = erroné, information pour stockage PKT_RX_INF (Pkld)=1,
étape 52 = erroné, envoi de CKS_VER_ REQ.

Lorsque la valeur du CRC radio complet 41 est correcte et la valeur du CRC_Error Flag est correcte 42, il transmet, 65, l'information correcte pour stockage, alors le procédé remonte 64, l'information erronée pour stockage dans la pile P et comme dans le sous-procédé précédent, a lieu la transmission d'une demande de vérification de l'intégrité du paquet CKS VER_REQ, et le lancement de timer (44, 45) CKS_VER(Pkld) pour vérification de l'intégrité du paquet,
étape 65 = correcte, information pour stockage PKT_RX_INF (Pkld) = 0.

Lors de l'étape de remontée du paquet vers les couches hautes 46, décrites à la figure 5A, le procédé va remonter, 66, vers la pile P l'information de stockage pour le paquet Pkld (pendant de l'information PKT_RX_INF(Pkld) qui informait de la potentielle arrivée d'un paquet avec la valeur du CRC_Error_Flag, tenant compte y compris du CRC en-tête RTP dans le cas où cette somme de contrôle existe.

Dans le cas où la transmission sur le dernier bond a corrompu le paquet, le module de réponse 70 aux demandes de contrôle CKS_VER_REQ est sollicité et va donc, au lancement du timer CKS-VER(Pkld), en parallèle de la remontée 51, interroger 67, la pile P pour vérifier si cette dernière contient une version intègre du paquet, auquel cas le timer CKS_VER(Pkld) est mis à zéro, et c'est la charge utile intègre qui sera substituée à la charge utile erronée dans le tampon Q 54, remplacement par le paquet Pkt correct. Ensuite, à l'expiration du timer T(Pkld) 56, le procédé va extraire le paquet pour transmission en ayant au préalable, recalculé, 57, le CRC radio comme il a été expliqué précédemment. S'il ne trouve pas de paquet intègre, le procédé attend la remontée 51 et alors propage le paquet lorsque seule la charge utile a été corrompue puisqu'un décodeur multimédia robuste pourrait être en mesure d'utiliser correctement de paquet. Dans ce cas, les en-têtes pour paquet (Pkld) sont correct,
étape 51 = En-tête correct pour paquet (Pkld), PKT_HD_INF (Pkld) =0.

Un des autres intérêts de l'introduction de la pile P est la possibilité grâce à elle pour le noeud de réaliser une fonction proxy, en agissant sur la voie montante, c'est-à-dire sur les requêtes transmises depuis le client vers la source, afin d'interroger la pile P sur les paquets demandés au serveur et de modifier les requêtes pour ne laisser passer que les requêtes que le noeud courant ne peut servir (avec paquets erronés ou non selon éventuellement le choix du client) et l'envoi en parallèle des paquets disponibles vers le client. Cette variante de réalisation est mise en oeuvre de la manière suivante :
Sur réception d'une nouvelle demande de transmission multimédia, le procédé :
   - calcule la valeur CRC radio complet.
   - teste la valeur du CRC en-tête liaison,
      si cette dernière est erronée, alors le paquet est éliminé
      si la valeur du CRC en-tête est sans erreur: alors
         si le noeud est le destinataire: le paquet est remonté vers l'application
         si le noeud n'est pas le destinataire, alors :
      le paquet est stocké dans la pile temporaire Q avec le timer T(pkltd)
      le paquet est remonté vers l'application,
      à l'expiration du timer le paquet est transmis sur un nouveau bond après re-calcul du CRC complet
Au niveau application:
   - si les données demandées sont stockées dans la pile P, la pile envoie la réponse nécessaire ou commence directement la transmissions des données demandées, sinon elle envoie un message pour éliminer le paquet de la pile Q (ce paquet ne doit pas être transmis sur un nouveau bond).

En résumé, dans la deuxième variante de réalisation de l'invention comprenant la présence d'une pile P, le procédé en plus des étapes mises en oeuvre au cours de la première variante exécute les étapes suivantes :
Stocker les données reçues au niveau du noeud dans une pile P,
Ajouter une information de marquage, c'est-à-dire l'identification du fragment de données, l'information sur sa possible corruption à chaque remontée dans la pile (fonctionnalité qui n'était qu'optionnelle dans la première variante).

En pratique, afin de réaliser ces fonctions, les opérations devront être réalisées dans le logiciel selon l'invention nommé « proxylite » au niveau des couches hautes (application). La gestion du paquet est déportée au niveau application (espace utilisateur) ainsi que les vérifications et décisions, puis le procédé fait un retour vers la pile de paquets stockés temporairement pour éventuellement modifier, éliminer ou retransmettre le paquet. Cette remontée dans les couches s'explique par le fait que le marquage s'appuie sur le calcul de sommes de contrôle (au niveau radio et au niveau transport) qui sont naturellement traités par la machine en remontant les paquets depuis la couche radio.

Le « proxylite » pourra ainsi procéder au stockage dans une pile au niveau applicatif des paquets reçus et à la mise en place d'un outil de marquage des paquets permettant de leur appliquer une étiquette indiquant si le paquet est correct ou corrompu.

Le paquet (identifié par Pkld) est reçu sur l'interface radio, et si le noeud n'est pas sa destination, est copié dans un tampon local (Q) en attendant la vérification du paquet : la transmission au noeud suivant ne sera faite que si et seulement si les en-têtes (radio, réseau et transport) sont corrects.

Le paquet est également remonté vers les couches hautes pour d'une part vérification de sa possible corruption (l'intégrité des différentes en-têtes est vérifié grâce à leurs sommes de contrôle respectives) et d'autre part stockage dans une pile locale (P) de longue durée avec des informations supplémentaires sur le fragment de données (identifiant du fragment, possible corruption, ...).

Dans le cas où la transmission sur le dernier bond avant le noeud courant a corrompu le paquet, on vérifie que les en-têtes sont intègres afin de pouvoir router convenablement le paquet, après avoir vérifié si la pile P est présente et si elle contient une version intègre du paquet, auquel cas c'est la charge utile intègre qui sera substituée à la charge utile erronée dans le tampon (Q). Si la pile P n'est pas présente ou ne contient pas le paquet, alors on propagera tout de même le paquet lorsque seule la charge utile a été corrompue puisqu'un décodeur multimédia robuste pourrait être en mesure d'utiliser correctement ce paquet.
A chaque nouveau bond radio, le CRC de la couche radio est recalculé, puisque c'est un nouveau lien radio qui est établi. Ceci permet également un traitement plus rapide des transmissions bond par bond (la détection de nouvelles erreurs engendrant plus de traitements) et évite que des noeuds non équipés du procédé selon l'invention ne jettent le paquet partiellement corrompu. Il est important de noter que le recalcul de ce CRC fait que pour ne pas perdre la connaissance d'une corruption, il est nécessaire de marquer le paquet d'informations avec une étiquette (notée CRC_Error_flag) indiquant si la charge utile est erronée on non. En effet, l'utilisation de la somme de contrôle transport n'est pas suffisant pour détecter ce que seul l'en-tête radio du bond où la corruption a eu lieu saura détecter.
Dans la réalisation considérée ici, on propose d'intégrer cette étiquette comme une information dans une extension spécifique de l'en-tête RTP du paquet. de manière optionnelle, l'en-tête RTP spécifique peut contenir une somme de contrôle supplémentaire (dit CRC RTPproxylite) permettant la validation de l'en-tête RTP et éventuellement des premiers octets de la charge utile. Cette fonctionnalité supplémentaire permettra de protéger les informations clefs non protégées par la somme de contrôle de la couche transport, et donc d'assurer que le paquet conservé avec une étiquette CRC_Error_flag égale à 1 a des chances raisonnables d'être utile pour le décodeur multimédia.
L'information CRC_Error_flag a notamment trois buts :
Permettre de mettre à jour la pile de stockage (P) avec une version détectée correcte d'un paquet qui aurait été préalablement reçu avec erreurs,
Choisir ou non (selon des paramètres de la requête du client, ou choix du système) de propager l'ensemble des paquets stockés ou seulement les paquets corrects,
Permettre au client de fournir à son décodeur multimédia l'information de corruption pour lancer au besoin un décodage robuste.
Comme dit précédemment, la pile locale (P) stocke en couche application (espace utilisateur) avec les fragments reçus également leurs identifiants et l'information CRC_error_flag. Pour que la fonction de proxy soit efficace, l'identifiant du paquet doit être unique et pertinent. Comme l'on souhaite que le noeud réponde à une requête d'un autre utilisateur avec cette fonction de proxy, l'identifiant doit donc contenir à la fois l'information de dénomination du flux multimédia mais aussi une identification du paquet dans ce flux. De nombreuses solutions sont envisageables pour cet identifiant, qui sera lui aussi stocké dans l'en-tête RTP spécifique du paquet. Du fait de l'approche variable retenue pour la diffusion, plus que le fichier vidéo lui-même, les fragments que sont les paquets de données segmentés de manière cohérente à la fois pour l'application et pour l'encapsulation réseau sont ici considérés comme l'unité à identifier. Il est ainsi possible d'envisager le format présenté en Table 1

**Table 1 - Proposition d'identifiant d'un fragment transmis sur le réseau adhoc.**

| Identifiant du fichier | Identification du fragment | Informations du fragment dans le fichier (optionnel) | Somme de contrôle | Validité du fragment |
|---|---|---|---|---|
| **→** par exemple obtenu par fonction de hachage sur le nom du fichier (ex : MD5 sur 64 ou 128 bits ) | **→** numéro de fragment dans le fichier. | **→** champ permettant d'indiquer d'éventuelles opérations faites sur le fragment (i.e. application de protection, type de CRC utilisé, ...). | **→** Somme de contrôle sur le fragment + information de portée. La somme de contrôle porte sur l'en-tête RTP+ éventuellement une partie de la charge somme a pour objet de permettre de détecter la validité du paquet véhiculant le fragment multimédia (ex : 16/32 bits d'un CRC, 64 bits avec MD5 ...) | **→** étiquette CRC_error _flag indiquant si le fragment est corrompu ou valide (pas d'erreur). |

Grâce au fonctionnement du proxylite, les requêtes faites par les clients dans le réseau adhoc (opérations en voie « montante ») seront interceptées par chacun des noeuds et la requête sera comparée à la liste des paquets en mémoire dans la pile (P) du noeud courant. Dans le cas où l'un (ou plusieurs) des paquets demandés est (sont) présent(s) dans la pile, la requête du client est modifiée pour ne plus porter que sur les fragments manquants et les fragments disponibles sont extraits de la pile (P) pour transmission vers le client demandeur.

Cependant, il reste important de garder en mémoire le fait que les paquets marqués d'un CRC_error_flag égal à 1 pourraient être trop corrompus pour être utilisables par un, plusieurs ou tous les clients. Afin de permettre la remise en cause de la pertinence du paquet corrompu, nous proposons donc également de stocker dans la liste des informations supplémentaires annexées à son fragment dans la pile (P) les destinataires auxquelles les trames corrompues ont été transmises. Ainsi, dans le cas où une seconde requête d'un client serait reçue pour un fragment corrompu qui lui aurait déjà été transmis, on en déduira que le fragment a de fortes chances d'être trop corrompu pour être utile, et donc on le supprimera de la pile (P) avant de retransmettre la requête concernant ce fragment vers la source.

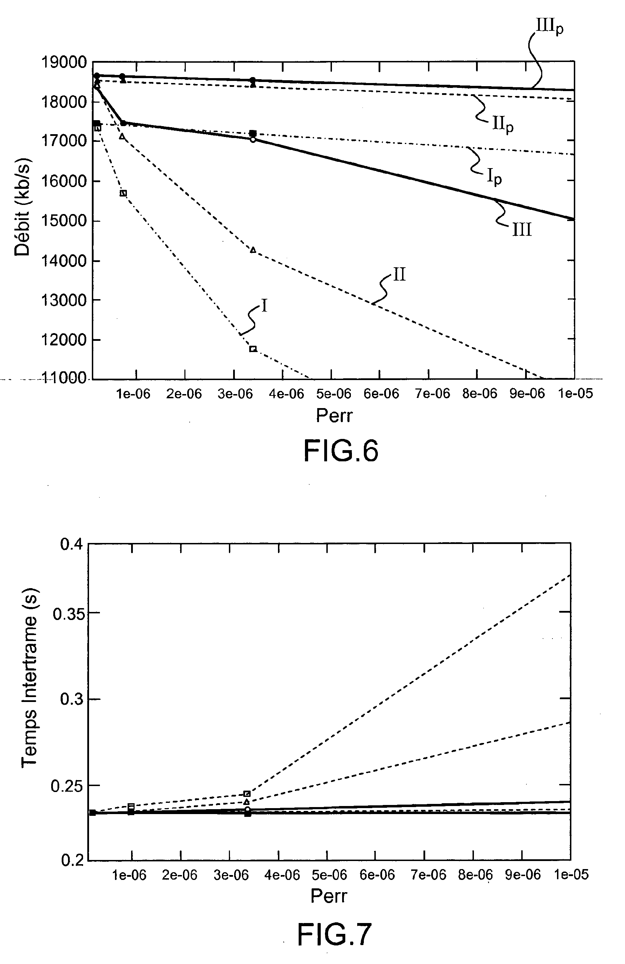

Les figures 6 et 7 décrivent les mesures d'évolution du débit utile offert pour différentes configurations du système, les courbes I, II, III correspondent aux résultats obtenus par les systèmes de l'art antérieur, respectivement pour 2, 4 et 6 bonds. Les courbes Ip, IIp, IIIp sont obtenues respectivement pour 2, 4 et 6 en utilisant le procédé selon l'invention. De ces courbes, il ressort que la fonctionnalité proxylite permet d'obtenir un gain, qui limite la chute du débit avec l'augmentation de la durée de l'intervalle moyen de temps entre la réception de deux trames vidéo pour le client.

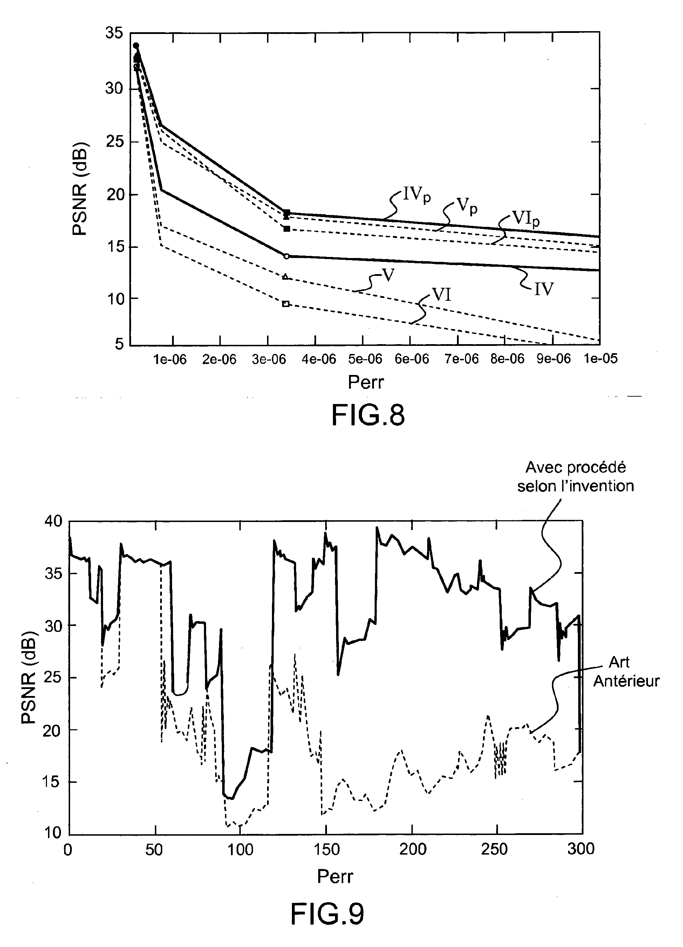

La figure 8 montre pour les mêmes configurations du système que sur les figures 6 et 7 le gain en qualité objective (représenté par le PSNR Peak Signal to Noise Ratio), les courbes IV, V, VI correspondent aux résultats obtenus par les systèmes de l'art antérieur, respectivement pour 2, 4 et 6 bonds, l'indice p correspondant aux courbes obtenues en utilisant le procédé selon l'invention. Ceci apparaît encore plus clairement en observant l'évolution de la qualité vidéo instantanée de la vidéo transmise.

Dans un contexte où la ressource radio est rare ou chère et/ou par souci d'économie des batteries de noeud jouent le rôle d'un réseau ad hoc (dans un réseau de pairs mobiles, chaque noeud joue le rôle de relais y compris pour des données qui ne le concerne pas, et donc pour lesquels il ne voudra pas épuiser sa batterie, il sera donc intéressant de ne demander une retransmission des données multimédia erronés que si le taux d'erreurs est réellement important, c'est-à-dire que l'information transmise par le paquet corrompu ne suffit pas au décodeur multimédia pour fournir un masquage pertinent. Statistiquement, le fait d'obtenir des en-têtes corrects, par exemple au moyen de la somme de contrôle UDP-Lite, dans un paquet est un test raisonnable permettant de savoir si le paquet a des chances de ne pas être trop corrompu pour le décodeur de sources sache l'utiliser.

Le procédé et le système selon l'invention permettent d'améliorer les performances des transmissions point à multipoints grâce à la double fonction de « proxy » et « lite ». Un des intérêts de ce système est qu'il peut s'adapter sur toute technique de routage adaptatif pour en tirer parti et améliorer les performances du système.

L'invention permet aussi de limiter de la bande passante utilisée aux transmissions utiles (un noeud ayant connaissance d'une information la fournit directement, sans qu'il soit besoin de remonter jusqu'à la source (fonction de proxy). Cette opération est fait y compris pour les paquets éventuellement corrompus au niveau de la charge utile, afin de tirer parti des capacités des flux multimédias à être affichés avec quelques erreurs ou pertes (fonction de proxylite).

De plus, chaque paquet est marqué afin que l'on puisse savoir son état exact (corrompu ou non) et autoriser des demandes de retransmission ou non en fonction des choix utilisateurs/système.

## Revendications

1. Procédé de transmission de données multimédia dans un réseau de communication ad hoc comprenant au moins une source S et plusieurs noeuds Ni communiquant entre eux au moyen de liens Li, ledit procédé étant exécuté dans un nombre Np desdits noeuds Ni et comprenant au moins les étapes suivantes:
Recevoir (20) au moins un paquet de données multimédia, ledit paquet de données comprenant un ou plusieurs en-têtes, un CRC transport, un CRC en-tête liaison, un CRC radio,
Effectuer (21) un calcul du CRC radio complet dudit paquet reçu,
a) dans le cas où la valeur du CRC en-tête liaison comporte une erreur, alors le paquet est éliminé, (22)
b) dans le cas où la valeur du CRC en-tête liaison est sans erreur, alors l'étape suivante consiste à regarder si le noeud en cours Ni est le noeud destinataire
marquer ledit paquet de données avec une étiquette par l'indication CRC_Error_Flag (54) dans le cas où la charge utile de paquet de données est erronée,
c) Si le noeud courant est le noeud destinataire, alors le procédé va remonter la valeur du CRC radio complet (25), tester (26) si la valeur du CRC transport est erronée, éliminer le paquet (27) si cette valeur est erronée, sinon, remonter le paquet vers l'application (30) pour décodage,
d) Si le noeud courant n'est pas le noeud destinataire, alors, (40), le procédé stocke le paquet dans une pile temporaire Q et initialise un timer T (pkltd) correspondant à une durée maximale de traitement des données du paquet,
le procédé vérifie ensuite la valeur du CRC radio complet du paquet (41),
si cette dernière est correcte alors le procédé va modifier la pile Q et remettre à zéro le timer T(pkltd) (43) pour envoi du paquet (56, 57, 58), puis le procédé passe au traitement d'un autre paquet de données multimédia,
si la valeur du CRC radio complet des données est erronée, alors (44), le procédé lance le déclenchement d'un timer CKS_VER(Pkld) (45) pour une vérification au niveau de l'intégrité de la charge des données,
en parallèle, le procédé effectue la remontée (46) du paquet des données multimédia vers les couches hautes du réseau radio, en éliminant les paquets dont la valeur du CRC transport est erronée (48) et vérifie si la valeur du CRC transport est exacte, et si la valeur du CRC transport est exacte remonte les en-têtes correctes pour le paquet Pkld (51) pour les paquets dont la valeur du CRC spécifique RTP est correcte,
si le timer CKS_VER(Pkld) qui correspond à la vérification de l'intégrité du paquet, est expiré, dans tous les cas, le procédé modifie la pile Q en éliminant le paquet (55),
e) à l'expiration du timer T(Pkld) (56) le procédé va extraire le paquet de la pile Q pour le transmettre sur un nouveau bond, ou vers un autre noeud du réseau, pour cela il va effectuer un re-calcul du CRC radio complet (57), puis va émettre le paquet sur le lien physique (58) vers le bond suivant en destination d'un noeud du réseau.

2. Procédé selon la revendication 1 **caractérisé en ce que** au cours de l'étape d), si le timer CKS_VER(Pkld) n'est pas expiré, alors le procédé modifie la pile ou mémoire temporaire Q en positionnant un champ indiquant la corruption du paquet.

3. Procédé selon la revendication 1 **caractérisé en ce qu'**un paquet de données comprend une étiquette correspondant à une information dans une extension spécifique de l'en-tête RTP du paquet, ladite en-tête RTP spécifique contenant une somme de contrôle supplémentaire permettant la validation de l'en-tête RTP et éventuellement des premiers octets de la charge utile, les paquets étant éliminés lorsque cette valeur est erronée.

4. Procédé selon la revendication 1 **caractérisé en ce qu'**il comprend une étape de mémorisation d'informations incluant au moins les étapes suivantes :
lorsque le noeud sur lequel sont reçues les données est destinataire, simultanément le procédé remonte la valeur du CRC radio complet (25), et fait (61), une copie du paquet dans une pile P pour stockage (62) dans ladite pile P de l'identifiant du paquet, de la charge utile du paquet et de l'état du paquet,
dans le cas où le noeud n'est pas destinataire, alors, lorsque la valeur du CRC radio complet est incorrecte, le procédé remonte (63), l'information erronée (63A), pour stockage, et déclenche le timer CKS_VER(Pkld) de vérification du paquet (52),
lorsque la valeur du CRC radio complet est correct (41) et la valeur du CRC_Error Flag est correcte (42), ledit procédé transmet (65) l'information correcte pour stockage, remonte l'information erronée (64) pour stockage et selon les étapes des revendications 1 ou 2, le procédé déclenche une demande de vérification de l'intégrité du paquet CKS_VER_REQ, et le lancement de timer (44, 45) CKS_VER(Pkld) pour vérification de l'intégrité du paquet,
lors de l'étape de remontée du paquet vers les couches hautes (46), le procédé va remonter (66) vers la pile P l'information de stockage pour le paquet Pkld,
dans le cas où la transmission sur le dernier bond a corrompu le paquet, le module (70) de réponse aux demandes de contrôle CKS_VER_REQ est sollicité et va donc, au lancement du timer CKS-VER(Pkld), en parallèle de la remontée (51), interroger (67), la pile P pour vérifier si cette dernière contient une version intègre du paquet, auquel cas le timer CKS_VER(Pkld) est mis à zéro, et le procédé substitue à la charge utile erronée la charge utile intègre dans la pile Q,
à l'expiration du timer T(Pkld), le procédé va extraire le paquet pour transmission en ayant au préalable recalculé (57) le CRC radio,
s'il ne trouve pas de paquet intègre, le procédé attend la remontée (51) de paquet et il propage le paquet lorsque seule la charge utile ou données a été corrompue.

5. Procédé selon la revendication 4 **caractérisé en ce que** lors du stockage dans la pile P, le procédé mémorise les données reçues au niveau du noeud ainsi que l'identification de données, information sur sa possible corruption à chaque remontée dans la pile P.

6. Procédé selon la revendication 4 **caractérisé en ce qu'**un noeud réalise une fonction proxy et **en ce qu'**il comporte au moins les étapes suivantes : ledit noeud intercepte des requêtes en voie montante, les requêtes émises d'un client vers la source d'émission, et **en ce qu'**il comporte au moins les étapes suivantes :
sur réception d'une nouvelle demande de transmission multimédia, le procédé :
- calcule la valeur CRC radio complet.
- teste la valeur du CRC en-tête liaison,
si cette dernière est erronée, alors le paquet est éliminé
si la valeur du CRC en-tête est sans erreur: alors
si le noeud est le destinataire: le paquet est remonté vers l'application
si le noeud n'est pas le destinataire, alors :
le paquet est stocké dans une pile temporaire Q avec le timer T(pkltd)
le paquet est remonté vers l'application,
à l'expiration du timer le paquet est transmis sur un nouveau bond après re-calcul du CRC complet
Au niveau application:
- si les données demandées sont stockées dans la pile P, la pile P envoie la réponse nécessaire ou commence directement la transmissions des données demandées, sinon elle envoie un message pour éliminer le paquet de la pile Q.

7. Système de transmission de données multimédia dans un réseau ad hoc comprenant au moins une source émettrice de données multimédia et plusieurs noeuds Ni communiquant entre eux grâce à des liens Li, lesdits noeuds comprenant une partie récepteur (4), permettant de recevoir un paquet de données, une partie émettrice (5) ayant pour fonction de transférer
un paquet vers un desdits noeuds Ni, **caractérisé en ce qu'**un nombre Np desdits noeuds Ni sont équipés des éléments supplémentaires suivants : une pile Q correspondant à une mémoire de stockage temporaire, un processeur (6) adapté à exécuter les étapes du procédé selon l'une des revendications 1 à 6.

8. Système de transmission selon la revendication 7 **caractérisé en ce qu'**un noeud est équipé d'une pile P ou mémoire à long terme adaptée à stocker des informations sur des paquets ayant transité par ce noeud, pour un noeud destinataire ou un noeud de transit.

## Patentansprüche

1. Verfahren zum Übertragen von Multimedia-Daten in einem Ad-hoc-Kommunikationsnetz, das wenigstens eine Quelle S und mehrere Knoten Ni umfasst, die miteinander über Verbindungen Li kommunizieren, wobei das Verfahren in einer Anzahl Np der Knoten Ni ausgeführt wird und wenigstens die folgenden Schritte beinhaltet:
Empfangen (20) von wenigstens einem Multimedia-Datenpaket, wobei das Datenpaket einen oder mehrere Header, eine Transport-CRC, eine Uplink-Header-CRC, eine Radio-CRC umfasst,
Durchführen (21) einer Berechnung der kompletten Radio-CRC des empfangenen Pakets,
a) falls der Wert der Uplink-Header-CRC einen Fehler aufweist, dann wird das Paket eliminiert (22),
b) falls der Wert der Uplink-Header-CRC fehlerlos ist, dann besteht der nachfolgende Schritt im Prüfen, ob der laufende Knoten Ni der Zielknoten ist,
Markieren des Datenpakets mit einem Flag durch die Anzeige CRC_Error_Flag (54), falls die Nutzlast des Datenpakets fehlerhaft ist,
c) wenn der aktuelle Knoten der Zielknoten ist, dann lädt das Verfahren den Wert des kompletten Radio-CRC (25) herauf, testet (26), ob der Wert der Transport-CRC fehlerhaft ist, eliminiert das Paket (27), wenn dieser Wert fehlerhaft ist, andernfalls lädt es das Paket zum Decodieren zur Anwendung (30) herauf,
d) wenn der aktuelle Knoten nicht der Zielknoten ist, dann speichert das Verfahren (40) das Paket in einem temporären Stapel Q und initialisiert einen Timer T(pkltd), der einer maximalen Dauer der Bearbeitung der Daten des Pakets entspricht,
das Verfahren prüft dann den Wert der kompletten Radio-CRC des Pakets (41),
wenn Letzterer korrekt ist, modifiziert das Verfahren den Stapel Q und setzt den Timer T(pkltd) (43) zurück auf null, um das Paket (56, 57, 58) zu senden, dann geht das Verfahren zur Bearbeitung eines anderen Multimedia-Datenpakets über,
wenn der Wert der kompletten Radio-CRC von Daten fehlerhaft ist, dann startet (44) das Verfahren einen Timer CKS_VER(Pkld) (45) zum Prüfen des Integritätsniveaus der Datenlast,
parallel dazu lädt (46) das Verfahren das Multimedia-Datenpaket zu den oberen Schichten des Radionetzes herauf und eliminiert dabei die Pakete, bei denen der Wert der Transport-CRC fehlerhaft (48) ist, und prüft, ob der Wert der Transport-CRC genau ist, und sendet, wenn der Wert der Transport-CRC genau ist, die korrekten Header für das Paket Pkld (51) für die Pakete, bei denen der Wert der CRC für das spezifische RTP korrekt ist,
wenn der Timer CKS_VER(Pkld), der der Prüfung der Integrität des Pakets entspricht, abgelaufen ist, dann modifiziert das Verfahren in allen Fällen den Stapel Q unter Eliminierung des Pakets (55),
e) nach Ablauf des Timers T(Pkld) (56) extrahiert das Verfahren das Paket des Stapels Q, um es auf einer neuen Teilstrecke oder zu einem anderen Knoten des Netzes zu übertragen, wozu es die komplette Radio-CRC (57) neu berechnet und das Paket dann auf der physikalischen Schicht (58) zur nächsten Teilstrecke auf dem Weg zu einem Knoten des Netzes sendet.

2. Verfahren nach Anspruch 1, **dadurch gekennzeichnet, dass** das Verfahren im Laufe von Schritt d), wenn der Timer CKS_VER(Pkld) nicht abgelaufen ist, den Stapel oder temporären Speicher Q durch Positionieren eines Feldes modifiziert, das die Korruption des Pakets anzeigt.

3. Verfahren nach Anspruch 1, **dadurch gekennzeichnet, dass** ein Datenpaket einen Flag umfasst, der einer Information in einer spezifischen Verlängerung des RTP-Headers des Pakets anzeigt, wobei der RTP-spezifische Header eine zusätzliche Prüfsumme enthält, die die Validierung des RTP-Headers und eventuell erster Bytes der Nutzlast zulässt, wobei die Pakete eliminiert werden, wenn dieser Wert fehlerhaft ist.

4. Verfahren nach Anspruch 1, **dadurch gekennzeichnet, dass** es einen Schritt des Speicherns von Informationen beinhaltet, der wenigstens die folgenden Schritte beinhalten:
wenn der Knoten, auf dem die Daten empfangen werden, der Zielknoten ist, dann lädt das Verfahren gleichzeitig den Wert der kompletten Radio-CRC (25) herauf und macht (61) eine Kopie des Pakets in einem Stapel P, um in dem Stapel P die Kennung des Pakets, die Nutzlast des Pakets und den Zustand des Pakets zu speichern (62),
falls der Knoten nicht der Zielknoten ist, dann lädt (63) das Verfahren, wenn der Wert der kompletten Radio-CRC inkorrekt ist, die falsche Information (63A) zum Speichern herauf und startet den Timer CKS_VER(Pkld) zum Prüfen des Pakets (52),
wenn der Wert der kompletten Radio-CRC korrekt ist (41) und der Wert des CRC_Error_Flag korrekt ist (42), dann überträgt (65) das Verfahren die korrekte Information zum Speichern, lädt (64) die falsche Information zum Speichern herauf und löst gemäß den Schritten von Anspruch 1 und 2 eine Anforderung zum Prüfen der Integrität des Pakets CKS_VER_REQ aus und startet den Timer (44, 45) CKS_VER(Pkld) zum Prüfen der Integrität des Pakets,
während des Schritts des Heraufladens des Pakets zu den oberen Schichten (46) lädt (66) das Verfahren die Speicherinformation für das Paket Pkld zum Stapel P herauf,
falls die Übertragung auf der letzten Teilstrecke das Paket korrumpiert hat, dann wird das Modul (70) zum Antworten auf Prüfanforderungen CKS_VER_REQ benutzt und fragt (67) somit, beim Start des Timers CKS-VER(Pkld), parallel zum Heraufladen (51), den Stapel P ab, um zu prüfen, ob dieser eine intakte Version des Pakets enthält, und in diesem Fall wird der Timer CKS_VER(Pkld) auf null gesetzt und das Verfahren ersetzt die falsche Nutzlast durch die intakte Nutzlast im Stapel Q,
bei Ablauf des Timers T(Pkld) extrahiert das Verfahren das Paket zum Übertragen, nachdem es zuvor die Radio-CRC neu berechnet (57) hat,
wenn kein intaktes Paket gefunden wird, dann wartet das Verfahren auf das Heraufladen (51) des Pakets und propagiert das Paket, wenn nur die Nutzlast oder die Daten korrumpiert wurden.

5. Verfahren nach Anspruch 4, **dadurch gekennzeichnet, dass** das Verfahren beim Speichern im Stapel P die am Knoten empfangenen Daten sowie die Datenidentifikation aufzeichnet, Informationen über ihre mögliche Korruption bei jedem Heraufladen im Stapel P.

6. Verfahren nach Anspruch 4, **dadurch gekennzeichnet, dass** ein Knoten eine Proxy-Funktion realisiert, und dadurch, dass es wenigstens die folgenden Schritte beinhaltet: der Knoten fängt Anforderungen auf dem Rückkanal ab, bei denen es sich um von einem Client zur Sendequelle gesendete Anforderungen handelt, und dadurch, dass es wenigstens die folgenden Schritte beinhaltet:
beim Empfang einer neuen Multimedia-Übertragungsanforderung führt das Verfahren Folgendes aus:
Berechnen des Wertes der kompletten Radio-CRC;
Testen des Wertes der Uplink-Header-CRC,
wenn Letzterer fehlerhaft ist, dann wird das Paket eliminiert,
wenn der Wert der Header-CRC fehlerlos ist:
wenn der Knoten der Zielknoten ist: das Paket wird zur Anwendung heraufgeladen;
wenn der Knoten nicht der Zielknoten ist:
das Paket wird in einem temporären Stapel Q mit dem Timer T(pkltd) gespeichert,
das Paket wird zur Anwendung heraufgeladen,
nach Ablauf des Timers wird das Paket auf einer neuen Teilstrecke nach dem Neuberechnen der kompletten CRC übertragen;
an der Anwendung:
wenn die angeforderten Daten im Stapel P gespeichert sind, dann sendet der Stapel P die nötige Antwort oder beginnt direkt mit der Übertragung der angeforderten Daten, ansonsten sendet er eine Nachricht zum Eliminieren des Pakets vom Stapel Q.

7. System zum Übertragen von Multimedia-Daten in einem Ad-hoc-Netz, umfassend wenigstens eine Multimedia-Daten-Sendequelle und mehrere Knoten Ni, die miteinander über Verbindungen Li kommunizieren, wobei die Knoten einen Empfangsteil (4) zum Empfangen eines Datenpakets und einen Sendeteil (5) zum Übertragen eines Paket zu den Knoten Ni umfassen, **dadurch gekennzeichnet, dass** eine Anzahl Np der Knoten Ni mit den folgenden zusätzlichen Elementen ausgestattet sind: einem Stapel Q, der einem temporären Speicher entspricht, einen Prozessor (6) zum Ausführen der Schritte des Verfahrens nach einem der Ansprüche 1 bis 6.

8. Übertragungssystem nach Anspruch 7, **dadurch gekennzeichnet, dass** ein Knoten mit einem Stapel P oder einem Langzeitspeicher zum Speichern von Informationen über Pakete ausgestattet ist, die durch diesen Knoten passiert sind, für einen Zielknoten oder einen Transitknoten.

## Claims

1. A method for transmitting multimedia data in an ad hoc communication network comprising at least one source S and a plurality of nodes Ni communicating together by means of links Li, said method being executed in a number Np of said nodes Ni and comprising at least the following steps:
receiving (20) at least one multimedia data packet, said data packet comprising one or more headers, a transport CRC, an uplink header CRC, a radio CRC;
calculating (21) the complete radio CRC of said received packet:
a) in the event that the value of the uplink header CRC includes an error, then the packet is eliminated (22);
b) in the event that the value of the uplink header CRC is without error, then the next step consists in observing if the current node Ni is the receiver node;
marking said data packet with a flag using the indication CRC_Error_Flag (54) in the event that the payload of the data packet is erroneous;
c) if the current node is the receiver node, then the method will upload the complete radio CRC value (25), test (26) if the value of the transport CRC is erroneous, eliminate the packet (27) if this value is erroneous, otherwise it will upload the packet to the application (30) for decoding;
d) if the current node is not the receiver node then the method stores (40) the packet in a temporary stack Q and initialises a timer T(pkltd) corresponding to a maximum duration for processing the packet data;
the method then confirms the complete radio CRC value of the packet (41);
if said packet is correct then the method will modify the stack Q and reset the timer T(pkltd) to zero (43) in order to send the packet (56, 57, 58), the method will then proceed with the processing of another multimedia data packet;
if the value of the complete radio CRC of the data is erroneous then the method starts (44) a timer CKS_VER(Pkld) (45) for verifying the level of integrity of the data load;
in parallel, the method uploads (46) the multimedia data packet to the upper layers of the radio network whilst eliminating packets for which the transport CRC is erroneous (48) and verifies if the value of the transport CRC is exact and, if the value of the transport CRC is exact, uploads the correct headers for the packet Pkld (51) for the packets for which the value of the CRC for specific RTP is correct;
if the timer CKS_VER(Pkld) that corresponds to the verification of the integrity of the packet has expired the method will in all cases modify the stack Q by eliminating the packet (55);
e) on expiry of the timer T(Pkld) (56) the method will extract the packet from the stack Q so that it can be transmitted on a new hop or toward another node of the network, in order to achieve this it will recalculate the complete radio CRC (57) and will then transmit the packet on the physical link (58) toward the next hop destined for a node of the network.

2. The method according to claim 1, **characterised in that** during step d) if the timer CKS_VER(Pkld) has not expired then the method modifies the stack or temporary memory Q by positioning a field indicating the corruption of the packet.

3. The method according to claim 1, **characterised in that** a data packet comprises a flag corresponding to an item of information in a specific extension of the RTP header of the packet, said specific RTP header containing an additional checksum allowing the validation of the RTP header and possibly first bytes of the payload, the packets being eliminated when this value is erroneous.

4. The method according to claim 1, **characterised in that** it comprises a step of storing information including at least the following steps:
when the node on which the data is received is the destination node, said method simultaneously uploads the value of the complete radio CRC (25) and makes (61) a copy of the packet in a stack P for storing (62) the packet identifier, the payload of the packet and the state of the packet in said stack P;
in the event that the node is not the receiver node then, when the value of the complete radio CRC is incorrect, said method uploads (63) the erroneous information (63A) for storage and starts the timer CKS_VER(Pkld) for verifying the packet (52);
when the value of the complete radio CRC is correct (41) and the value of the CRC_Error_Flag is correct (42), said method transmits (65) the correct information for storage, uploads (64) the erroneous information for storage and, according to the steps of claim 1 or 2, triggers a request for verifying the integrity of the packet CKS_VER_REQ and starts the timer (44, 45) CKS_VER(Pkld) for verifying the integrity of the packet;
during the step (46) for uploading the packet to the upper layers the method will upload (66) the storage information for the packet Pkld to the stack P;
in the event that the transmission on the last hop has corrupted the packet, the module (70) for responding to check requests CKS_VER_REQ is used and will therefore, when the timer CKS_VER(Pkld) is triggered in parallel to the upload (51), interrogate (67) the stack P to verify if said stack contains a complete version of the packet, in which case the timer CKS_VER(Pkld) is reset to zero and the method substitutes the erroneous payload with the full payload in the stack Q;
on expiry of the timer T(Pkld) the method will extract the packet for transmission after having previously recalculated (57) the radio CRC;
if a complete packet is not found the method waits for the upload (51) of the packet and it propagates the packet when only the payload or data has been corrupted.

5. The method according to claim 4, **characterised in that**, when storing in the stack P, the method records the data received at the node, as well as the data identification, which is information relating to its possible corruption upon each upload in the stack P.

6. The method according to claim 4, **characterised in that** a node carries out a proxy function and **in that** it comprises at least the following steps: said node intercepts requests from a return channel, which requests are those transmitted from a client toward the transmission source, and **in that** it comprises at least the following steps:
upon receipt of a new multimedia transmission request the method:
calculates the complete radio CRC value;
tests the uplink header CRC value;
if said value is erroneous, then the packet is eliminated;
if the CRC header value is without error then:
if the node is the receiver node the packet is uploaded to the application;
if the node is not the receiver node then:
the packet is stored in a temporary stack Q with the timer T(pkltd);
the packet is uploaded to the application;
upon expiry of the timer, the packet is transmitted on a new hop after recalculation of the complete CRC;
at the application level:
if the requested data is stored in the stack P, said stack P sends the necessary response or immediately starts the transmissions of the requested data, otherwise it sends a message for eliminating the packet from the stack Q.

7. A system for transmitting multimedia data in an ad hoc network comprising at least one multimedia data transmission source and a plurality of nodes Ni communicating together by virtue of links Li, said nodes comprising a reception part (4) for receiving a data packet, a transmission part (5) for transferring a packet toward one of said nodes Ni, **characterised in that** a number Np of said nodes Ni are provided with the following additional elements: a stack Q corresponding to a temporary storage memory, a processor (6) designed to execute the steps of the method according to any one of claims 1 to 6.

8. The transmission system according to claim 7, **characterised in that** a node is provided with a stack P or long-term memory designed to store information on packets that have passed through said node, for a receiver node or a transit node.
